# EUROPEAN PATENT APPLICATION

(11) **EP 4 832 442 A1**
(43) Date of publication of application: **28.10.2026**
(21) Application number: 26169133.1
(22) Date of filing: 30.03.2026
(51) Int. Cl.: H04L 41/16, G06F 11/07, G06N 20/00, H04L 41/0631, H04L 41/0677, H04L 41/147, H04L 41/149

(54) **METHODS FOR DIAGNOSING DATAPATHS USING ARTIFICIAL INTELLIGENCE AND DEVICES THEREOF**

(30) Priority: 22.04.2025 US 202519186568
(71) Applicant: F5, INC., Seattle, WA 98104 (US)
(72) Inventor: MAES, II, Richard D., Seattle, WA, 98104 (US); FERGUSON, JC, Seattle, WA, 98104 (US)
(74) Representative: Savi, Massimiliano

(57) **Abstract**

A method, system, and non-transitory computer readable medium includes generating a prompt comprising at least one of device diagnostic data dump or telemetry data associated with a datapath and providing, to a large language model, the prompt. The large language model can be configured to evaluate the device diagnostic data dump or live telemetry data to identify a first occurrence of a first problem in the datapath. Next, the method can include receiving, from the large language model, at least one of configuration recommendation or location data of at least one identified problem based on the device diagnostic data dump or at least one identified potential problem based on the telemetry data in the datapath for analysis.

## Description

### FIELD

This technology generally relates to diagnosing datapaths and, more particularly, to methods for diagnosing high-speed datapaths using artificial intelligence and supervised and unsupervised learning and devices thereof.

### BACKGROUND

Diagnosing system problems is a complex and labor-intensive process that conventionally requires multiple engineers to analyze extensive debug dumps-often consisting of gigabytes of data-to identify the initial problem that started the issue. This examination is not only time-consuming but also prone to errors and oversight, as the sheer volume of data can overwhelm capabilities. Engineers spend days sifting through data to assign a bug to appropriate groups for diagnosis, delaying resolution processes. Each diagnostic set of data is processed independently, which further exacerbates the time and effort required. For instance, if ten different customers experience a similar issue, each set of data from these ten sources must undergo the same exhaustive analysis to determine the root cause. Additionally, traditional systems have difficultly preventing and identifying problems before they arise because of this traditional, time-consuming processing method. Continuous collection of data would be difficult to process using traditional methods, leading to further delays and inefficiencies.

The lack of scalable and efficient techniques for processing and analyzing such large datasets hampers the effectiveness of identifying system issues, which is crucial for maintaining optimal performance. Consequently, many organizations struggle with the inefficiencies of current methods or avoid the process altogether due to its complexity and the high risk of missing critical issues. Traditional methods are particularly problematic for proactive diagnosis, as they often fail to detect early indicators of potential problems in time series data. Currently, no effective mechanism exists for automating the analysis of data to pinpoint a first occurrence of a problem or to anticipate future problems.

Therefore, a system that diagnoses datapaths to pinpoint the first occurrence of an problem and that focuses on identifying patterns suggesting an emerging problems is needed.

### SUMMARY

A method that can diagnose a datapath using artificial intelligence includes generating a prompt comprising device diagnostic data dump associated with a datapath and providing, to a large language model, the prompt. The large language model can be configured to evaluate the device diagnostic data dump to identify a first occurrence of a first problem in the datapath. Next, the method can include receiving, from the large language model, location data of the first occurrence of the first problem in the datapath for analysis.

A non-transitory computer readable medium having stored thereon instructions comprising machine executable code which when executed by at least one processor, causes the processor to generate a prompt comprising device diagnostic data dump associated with a datapath and provide, to a large language model, the prompt. The large language model can be configured to evaluate the device diagnostic data dump to identify a first occurrence of a first problem in the datapath. Next, the executable code which when executed by at least one processor, causes the processor to receive, from the large language model, location data of the first occurrence of the first problem in the datapath for analysis.

A computing apparatus including at least one of configurable hardware logic configured to be capable of implementing or a processor coupled to a memory and configured to execute programmed instructions stored in the memory to generate a prompt comprising device diagnostic data dump associated with a datapath and provide, to a large language model, the prompt. The large language model can be configured to evaluate the device diagnostic data dump to identify a first occurrence of a first problem in the datapath. Next, the programmed instructions which when executed by the processor, causes the processor to receive, from the large language model, location data of the first occurrence of the first problem in the datapath for analysis.

A network traffic management system including at least memory comprising programmed instructions and one or more processors configured to generate a prompt comprising device diagnostic data dump associated with a datapath and provide, to a large language model, the prompt. The large language model can be configured to evaluate the device diagnostic data dump to identify a first occurrence of a first problem in the datapath. Next, the programmed instructions which when executed by at the one or more processors, causes the one or more processors to receive, from the large language model, location data of the first occurrence of the first problem in the datapath for analysis.

This technology provides a number of advantages, including offering a method, non-transitory computer-readable medium, and apparatus that enable the efficient diagnosis of system problems. This technology leverages a generative large language model (LLM) and intelligent prompt generation to analyze extensive debug data, identifying the root cause of problems while significantly reducing the time and effort required by engineers. By utilizing this advanced approach, the invention minimizes the workload for subject matter experts, who traditionally must sift through megabytes of data to locate the first occurrence of an problem. Traditionally, each diagnostic set of data received is processed independently by humans or humans with some machine assistance, which is time consuming. As a non-limiting example, if ten different customers experience a similar problem, each set of data from these ten sources must undergo the same exhaustive analysis to determine the root cause. However, by teaching the LLM to recognize signs, signals, and patterns associated with specific problems based on initial human analysis, subsequent similar problems can be anticipated and diagnosed by the machine rather than humans. This approach allows the system to learn from the analysis of the first problem and apply this knowledge to efficiently diagnose future occurrences of similar problems, significantly reducing the time and effort required for analysis.

The semi-greedy, unsupervised clustering algorithm employed by this technology allows for efficient and accurate problem identification, even with limited context windows. The iterative nature of the algorithm, combined with its ability to evaluate and select the most relevant data points, ensures high-quality diagnostics with minimal intervention. Over time, the LLM also becomes capable of identifying other, non-obvious data point indicators that are important for diagnostics. This innovative approach not only streamlines the debugging process but also enhances accuracy and scalability, making it a valuable tool for real-time telemetry and system diagnostics.

The technology uses an LLM trained by humans to handle two primary use cases: diagnosing problems based on device diagnostic data dump from networking devices (reactive) and analyzing live, time series data for signs of emerging problems (proactive). In the reactive use case, the LLM processes extensive debug data to identify the root cause of problems, reducing the manual effort required by engineers. In the proactive use case, the same trained model examines live, time series data to detect early indicators of potential problems, allowing for timely intervention. The technology's ability to provide live feedback and analysis offers early insights into emerging problems, enabling a proactive system configuration adjustments and improving overall system reliability. By continuously monitoring and analyzing data in real-time, the system can identify and address potential problems before they escalate, ensuring optimal performance and reducing downtime.

### BRIEF DESCRIPTION OF THE DRAWINGS

FIG. 1 is a block diagram of an example of an environment with a diagnostic computing system;
FIG. 2A is a block diagram illustrating an example of an architecture of a diagnostic computing system;
FIG. 2B is a block diagram illustrating an example of an architecture of a database;
FIG. 2C is a block diagram illustrating an example of an architecture of a client device;
FIG. 3 is an exemplary flowchart of an exemplary method of diagnosing a datapath;
FIG. 4 is an exemplary flow of the diagnosis of a datapath using a large language model that analyzes device diagnostic data dump; and
FIG. 5 is an exemplary flow of a computing system alerting a user of an emerging problem using a large language model that analyzes collected, live time-series telemetry data.

### DETAILED DESCRIPTION

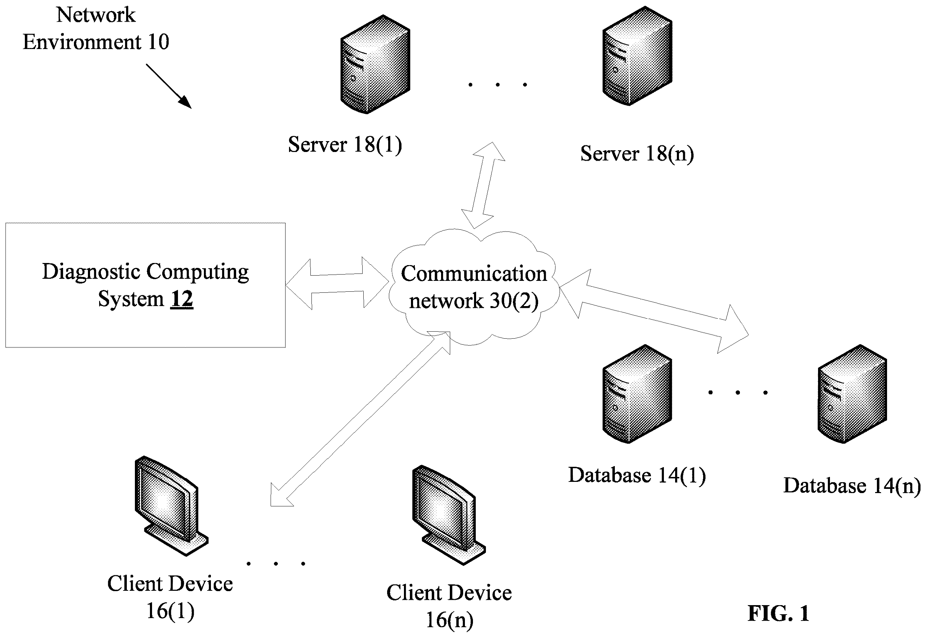

An environment 10 with an exemplary diagnostic computing system 12 is shown in FIGS. 1-2A. In this example, the environment 10 includes the diagnostic computing system 12, a plurality of databases 14(1)-14(n), a plurality of client devices 16(1)-16(n), and a plurality of servers 18(1)-18(n), although the environment may comprise other types and/or numbers of other systems, devices, components, and/or other elements in other configurations. This technology provides a number of advantages including providing systems, methods, and non-transitory computer readable media that provide effective methods for the diagnostics of high-speed datapaths.

Referring to more specifically to FIGS. 1-2A, in this example, the diagnostic computing system 12 includes one or more processor(s) 22, a memory 24, and/or a communication interface 26, which are coupled together by a bus or other communication link 28, although the diagnostic computing system 12 can include other types and/or numbers of elements in other configurations.

The processor(s) 22 of the diagnostic computing system 12 may execute programmed instructions stored in the memory of the diagnostic computing system 12 for any number of functions and other operations as illustrated and described by way of the examples herein. The processor(s) 22 of the diagnostic computing system 12 may include one or more CPUs or general purpose processors with one or more processing cores, for example, although other types of processor(s) can also be used.

The memory 24 of the diagnostic computing system 12 stores these programmed instructions for one or more aspects of the present technology as described and illustrated herein, although some or all of the programmed instructions could be stored elsewhere. A variety of different types of memory storage devices, such as random access memory (RAM), read only memory (ROM), hard disk, solid state drives, flash memory, or other computer readable medium which is read from and written to by a magnetic, optical, or other reading and writing system that is coupled to the processor(s), can be used for the memory 24.

Accordingly, the memory 24 of the diagnostic computing system 12 can store one or more applications that can include computer executable instructions that, when executed by the diagnostic computing system 12, cause the diagnostic computing system 12 to perform actions, such as to diagnose datapaths in the environment 10, and other actions as described and illustrated in the examples below with reference to FIGS. 1-5. The application(s) can be implemented as modules, programmed instructions, or components of other applications. Further, the application(s) can be implemented as operating system extensions, module, plugins, or the like.

Even further, the application(s) may be operative in a cloud-based computing environment. The application(s) can be executed within or as virtual machine(s) or virtual server(s) that may be managed in a cloud-based computing environment. Also, the application(s), and even the diagnostic computing system 12 itself, may be located in virtual server(s) running in a cloud-based computing environment rather than being tied to one or more specific physical computing devices. Also, the application(s) may be running in one or more virtual machines (VMs) executing on the diagnostic computing system 12. Additionally, in one or more embodiments of this technology, virtual machine(s) running on the diagnostic computing system 12 may be managed or supervised by a hypervisor.

In this particular example, the memory 24 of the diagnostic computing system 12 may include a large language model 30 which may be executed as illustrated and described by way of the examples herein, although the memory 24 can for example include other types and/or numbers of modules, platforms, algorithms, programmed instructions, applications, or databases for implementing examples of this technology.

The machine learning model 30 may be a large language model (LLM) 30. The LLM 30 can be configured to perform a wide range of natural language processing tasks, including answering questions, generating text, and engaging in conversational dialogue. Although not illustrated, the plurality of servers 18(1)-18(n) may host and/or manage a plurality of LLMs which may be pre-trained general purpose LLMs or fine-tuned LLMs. The plurality of servers 18(1)-18(n) may be a cloud-based server or an on-premises server. The fine-tuned LLM 30 may be accessed using an application programming interface (API) for use in applications. In another example, the fine-tuned LLM 30 may be hosted by the plurality of servers 18(1)-18(n) and managed remotely by the diagnostic computing system 12.

An LLM 30 is a type of artificial intelligence-machine learning (AI/ML) model that is used to process natural language data for tasks such as natural language processing, text mining, text classification, machine translation, question-answering, response generation, or the like. The LLM 30 uses deep learning or neural networks to learn language features from large amounts of data. The LLM 30 is, for example, trained on a dataset and then used to analyze data, generate predictions, project strings into a semantic vector space, or generate features from unseen data. The LLM 30 can be used to generate language features such as word embeddings, part-of-speech tags, named entity recognition, sentiment analysis, or the like. Unlike traditional rule-based NLP systems, the LLM 30 does not rely on pre-defined rules or templates to generate responses.

The LLM 30 may be configured to classify a dataset. Classifying a dataset may include determining whether a dataset is related to another datasets. Classifying a dataset may include clustering datasets and generating information indicating whether a dataset belongs to a cluster of datasets. In some embodiments, classifying a dataset may include generating data describing the dataset (e.g., a dataset index), including metadata, an indicator of whether data element includes actual data and/or synthetic data, a data schema, a statistical profile, a relationship between the test dataset and one or more reference datasets (e.g., node and edge data), and/or other descriptive information. Edge data may be based on a similarity metric. Edge data may and indicate a similarity between datasets and/or a hierarchical relationship (e.g., a data lineage, a parent-child relationship). In some embodiments, classifying a dataset may include generating graphical data, such as anode diagram, a tree diagram, or a vector diagram of datasets. Classifying a dataset may include estimating a likelihood that a dataset relates to another dataset, the likelihood being based on the similarity metric.

The LLM 30 may include one or more data classification models to classify datasets based on the data schema, statistical profile, and/or edges. A data classification model may include a convolutional neural network, a random forest model, a recurrent neural network model, a support vector machine model, or another machine learning model. A data classification model may be configured to classify data elements as actual data, synthetic data, related data, or any other data category. In some embodiments, the LLM 30 is configured to generate and/or train a classification model to classify a dataset, consistent with disclosed embodiments.

The diagnostic computing system 12 may also contain one or more models 30 configured to generate predictions. Prediction models may include statistical algorithms that are used to determine the probability of an outcome, given a set amount of input data. For example, prediction models may include regression models that estimate the relationships among input and output variables. Prediction models may also sort elements of a dataset using one or more classifiers to determine the probability of a specific outcome. Prediction models may be parametric, non-parametric, and/or semi-parametric models.

In some examples, prediction models may cluster points of data in functional groups such as "random forests." Random Forests may comprise combinations of decision tree predictors. (Decision trees may comprise a data structure mapping observations about something, in the "branch" of the tree, to conclusions about that thing's target value, in the "leaves" of the tree.) Each tree may depend on the values of a random vector sampled independently and with the same distribution for all trees in the forest. Prediction models may also include artificial neural networks. Artificial neural networks may model input/output relationships of variables and parameters by generating a number of interconnected nodes which contain an activation function. The activation function of a node may define a resulting output of that node given an argument or a set of arguments. Artificial neural networks may generate patterns to the network via an 'input layer', which communicates to one or more "hidden layers" where the system determines regressions via a weighted connections. Prediction models may additionally or alternatively include classification and regression trees, or other types of models known to those skilled in the art. To generate prediction models, the diagnostic computing system 12 may analyze information applying machine-learning methods.

The communication interface 26 of the diagnostic computing system 12 operatively couples and communicates between the diagnostic computing system 12 and the one or more of databases 14(1)-14(n), the one or more of the client devices 16(1)-16(n), and the one or more servers 18(1)-18(n), although other types and/or numbers of connections and/or communication networks can be used.

While the diagnostic computing system 12 is illustrated in this example as including a single device, the diagnostic computing system 12 in other examples can include a plurality of devices each having one or more processors (each processor with one or more processing cores) that implement one or more steps of this technology. In these examples, one or more of the devices can have a dedicated communication interface or memory. Alternatively, one or more of the devices can utilize the memory, communication interface, or other hardware or software components of one or more other devices included in the diagnostic computing system 12.

Additionally, one or more of the devices that together comprise the diagnostic computing system 12 in other examples can be standalone devices or integrated with one or more other devices or apparatuses, such as in one of the server devices or in one or more computing devices for example. Moreover, one or more of the devices of the diagnostic computing system 12 in these examples can be in a same or a different communication network including one or more public, private, or cloud networks, for example.

Although an exemplary diagnostic computing system 12 is described and illustrated herein, other types and/or numbers of systems, devices, components, and/or elements in other topologies can be used. It is to be understood that the systems of the examples described herein are for exemplary purposes, as many variations of the specific hardware and software used to implement the examples are possible, as will be appreciated by those skilled in the relevant art(s).

One or more of the components depicted in this diagnostic computing system 12, such as the diagnostic computing system 12, for example, may be configured to operate as virtual instances on the same physical machine. In other words, by way of example one or more of the diagnostic computing system 12 may operate on the same physical device rather than as separate devices communicating through communication network(s). Additionally, there may be more or fewer diagnostic computing system 12 than illustrated in FIG. 1.

In addition, two or more computing systems or devices can be substituted for any one of the systems or devices in any example. Accordingly, principles and advantages of distributed processing, such as redundancy and replication also can be implemented, as desired, to increase the robustness and performance of the devices and systems of the examples. The examples may also be implemented on computer system(s) that extend across any suitable network using any suitable interface mechanisms and traffic technologies, including by way of example only teletraffic in any suitable form (e.g., voice and modem), wireless traffic networks, cellular traffic networks, Packet Data Networks (PDNs), the Internet, intranets, and combinations thereof.

The examples may also be embodied as one or more non-transitory computer readable media having instructions stored thereon for one or more aspects of the present technology as described and illustrated by way of the examples herein. The instructions in some examples include executable code that, when executed by one or more processors, cause the processors to conduct steps necessary to implement the methods of the examples of this technology that are described and illustrated herein.

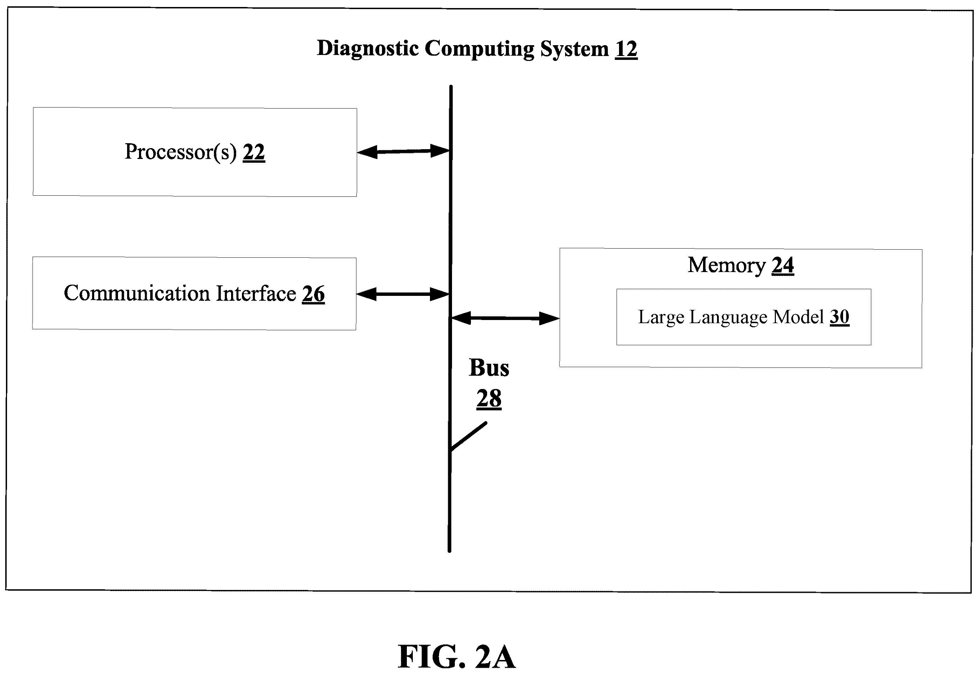

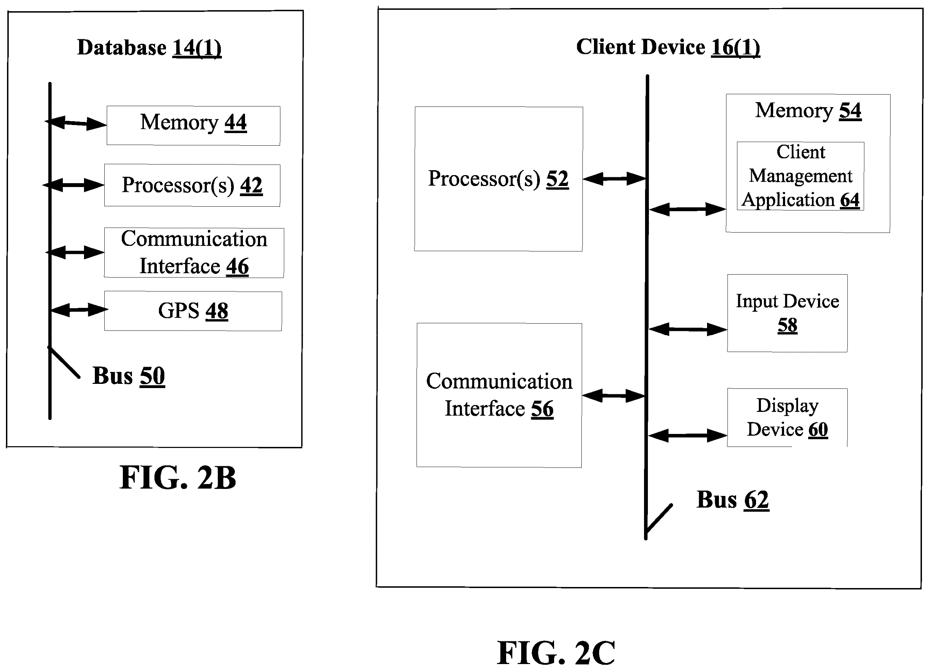

Referring to FIGS. 1 and 2B, the plurality of databases 14(1)-14(n) may comprise a variety of different types and/or numbers of systems, devices, or other things in the environment 10, such as a variety of different text data or other data or combinations thereof by way of example only. In this example, each of the databases 14(1)-14(n) at least have the same following structure and operation as shown in the example of the database 14(1) shown in FIG. 2B, although databases 14(1)-14(n) with other types and/or numbers of other systems, devices, components, and/or other elements may be used. Additionally, in this example, the database 14(1) has one or more processors 42, a memory 44, a communication interface, and a global positioning system (GPS) device 48 which are coupled together by a bus or other communication link 50, although each database of memos, profiles, transactions, or data could have other types and/or numbers of systems, devices, components and/or other elements in other configurations.

Referring to FIGS. 1 and 2C, the plurality of client devices 16(1)-16(n) in this example includes any type of computing device that can participate in the diagnostic of datapaths in an environment 10 with a client management application 64, such as mobile computing devices, desktop computing devices, laptop computing devices, tablet computing devices, virtual machines (including cloud-based computers), or the like. In this example, each of the client devices 16(1)-16(n) at least have the same following structure and operation as shown in the example of the client device 16(1) shown in FIG. 2C, although client devices with other types and/or numbers of other systems, devices, components, and/or other elements may be used. Additionally in this example, the client device 16(1) includes one or more processor 52, a memory 54, a communication interface 56, an input device 58, and a display device 60, which are coupled together by a bus or other communication link 62, types and/or numbers of systems, devices, components, or other elements in other configurations. Additionally, in this example the memory 34 includes a client management application 64 which enables the client 16(1) to interact with the diagnostic computing system 12 and one or more of the databases 14(1)-14(n) as illustrated and described by way of the examples herein, although the memory 54 can include other programmed instructions, modules, applications, or other data for example.

The plurality of servers 18(1)-18(n) in this example includes one or more processors, a memory, and a communication interface, which are coupled together by a bus or other communication link, although other numbers and/or types of network devices could be used. In this example, the servers 18(1)-18(n) can be located at different locations and may each process requests received from the diagnostic computing system 12 and/or the client devices 16(1)-16(n) via the communication network(s) 20. Various data and other applications may be operating on the diagnostic computing system 12 and transmitting data (e.g., files or Web pages) to the diagnostic computing system 12 and/or the client devices 16(1)-16(n). The servers 18(1)-18(n) may be hardware or software or may represent a system with multiple servers in a pool, which may include internal or external networks.

An exemplary method for diagnosing datapaths using the LLM 30 in the environment 10 with the diagnostic computing system 12 will now be described with reference to FIGS. 1-5.

### PROMPT GENERATION

When a datapath device or multiple datapath devices begin dropping or missing network traffic or begins having different counters behaving unusually, this may be an indication that the system is experiencing problems. To detect abnormalities in a system, the diagnostic computing system 12 can use histogram bucketing. In a non-limiting example, the diagnostic computing system 12 can generate histogram buckets to organize network traffic passing through the datapath based on predefined criteria and assign the network traffic meeting the predefined criteria to a corresponding histogram bucket of the histogram buckets. The diagnostic computing system 12 can then analyze the histogram buckets for a distribution and frequency of the network traffic and determine whether one of the buckets has exceeded or reached a predefined threshold. If one of the buckets exceeds or reaches the predefined threshold, the diagnostic computing system 12 can transmit an alarm to an operator of the datapath of the affected datapath device(s) (or a related device(s)) and provide, to the LLM 30, current device diagnostic data dump, current telemetry data, the one of the buckets that exceeded or reached the predefined threshold as a prompt (described further below, and not repeated herein for brevity). This approach allows for real-time monitoring and rapid response to potential performance problems, minimizing downtime and maintaining system efficiency. By leveraging both software and hardware-based data collection methods, the diagnostic computing system 12 ensures a robust and adaptable solution for various network environments.

In response, the diagnostic computing system 12 can receive device diagnostic data dump, telemetry data, and other related data associated with a datapath from datapath devices to diagnose the system problems. The datapath devices process the datapath for the client devices 16(1)-16(n). The datapath is a route that network traffic takes as it travels through a network or system such as the client devices 16(1)-16(n). The datapath includes various component blocks such as entry points, processing points, and exit points, each responsible for different stages of data handling. For example, one block may let network traffic into the system, another may analyze the network traffic to determine if it is legitimate or malicious, and a final block may allow the network traffic to exit the system. Understanding the datapath is essential for the diagnostic computing system 12 to diagnose performance problems because it helps identify where bottlenecks, packet drops, or other anomalies occur (outlined further below is how the LLM 30 is trained to understand the datapath).

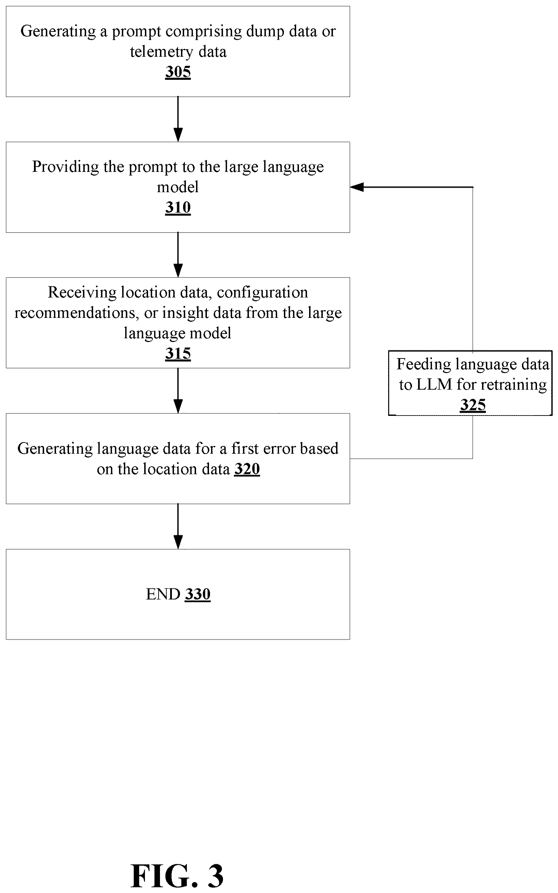

Referring more specifically to FIG. 3, in step 305, the diagnostic computing system 12 can generate a prompt to later feed to a LLM 30 to identify the problem. The prompt can comprise device diagnostic data dump or telemetry data. Device diagnostic data dump can consist of large files that capture a snapshot of a state of the datapath devices at a specific point in time. These large files can be quite extensive (megabytes of data), containing detailed information about memory usage, processor states, network traffic, and other critical system metrics. Device diagnostic data dump is often used for post-mortem analysis to understand what went wrong in one of the client devices 16(1)-16(n) by providing a comprehensive view of its operational state during a failure or performance problem.

Telemetry data can be collected in real-time and can provide continuous monitoring of the performance of the datapath devices that process the datapath of the client devices 16(1)-16(n). Telemetry data can be the collection of measurements or other data at datapath devices implementing the datapath of the client devices 16(1)-16(n) and the automatic transmission to an external system such as the diagnostic computing system 12 for monitoring. Telemetry data can help with the monitoring of an operational state of a network and application services, providing insights into performance, security, and user experience. Telemetry data can allow for early detection of potential problems, allowing for timely interventions before problems escalate. In the context of a datapath, telemetry data captures information from various points along the route that network traffic take through a network or system. The datapath includes multiple application services that handle different stages of data processing, such as firewalls, encryption/decryption, packet routing, scaling, security, and user interactions. The datapath is instrumented to collect telemetry data on how various components are being used, such as queues, ring buffers, packet processors, memory usage, and other components of the datapath known in the art. By collecting telemetry data from these points, organizations can troubleshoot problems, identify performance bottlenecks, and detect malicious activities. Telemetry data is helpful for understanding the overall health and performance of the datapath, enabling proactive monitoring and timely interventions. It provides a comprehensive view of the system's behavior, helping to improve both technical operations and business processes.

In this example, the diagnostic computing system 12 can generate the prompt using the device diagnostic data dump and telemetry data to allow the LLM 30 to analyze the data in the prompt for the identification of errors as described further below. To generate the prompt, the diagnostic computing system 12 can process the device diagnostic data dump and the telemetry data and structure them in a format that the LLM 30 can efficiently interpret. In some examples, the data in the prompt can be formatted into a structured, machine-readable format such as JSON or XML, or other formats known in the art, where the data is tagged with specific identifiers for the LLM 30 to interpret.

### LARGE LANGUAGE MODEL TRAINING AND EXECUTION

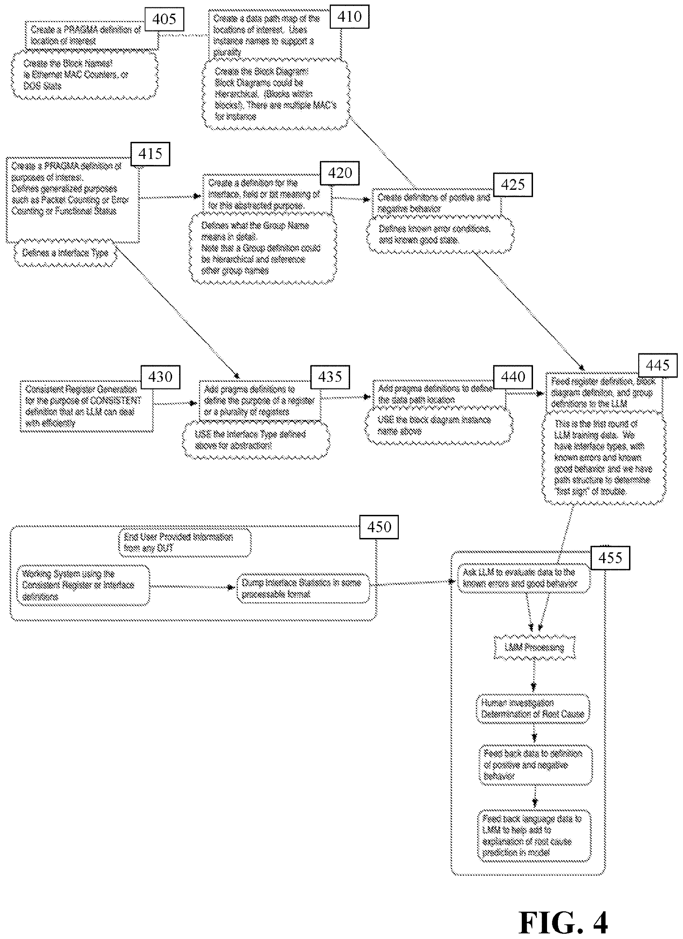

In step 310 of FIG. 3 (and also outlined in step 450 of FIG. 4), the diagnostic computing system 12 can provide the prompt to the LLM 30 by transmitting a request with the prompt (like an API request) to the LLM 30. When the diagnostic computing system 12 uses the LLM 30 to analyze a prompt, the LLM 30 can first tokenize the prompt, breaking down the text into smaller units such as words or sub-words. The diagnostic computing system 12 can then use the LLM 30 to process the tokens using neural networks, extracting features and patterns from the data in the prompt. The LLM leverages its pre-trained knowledge, which includes vast amounts of text data, to understand the context and semantics of the prompt (further described below). Using this understanding, the LLM 30 can identify relevant patterns, relationships, and anomalies within the data. Finally, the LLM 30 can generate a response or provides insights based on its analysis, drawing from its extensive training to offer accurate and contextually appropriate information.

### Training the LLM

As outlined in a non-limiting example in step 405 of FIG. 4, the diagnostic computing system 12 can train the LLM 30 to use the prompt to debug and analyze problems related to a datapath by generating a first set of pragma definitions for locations of interest in the datapath by assigning names to blocks in the datapath. Non-limiting examples of names that can be assigned to blocks in the datapath include, entry point, processing point, exit point. In step 410 of FIG. 4, the diagnostic computing system 12 can generate a datapath map of the locations of interest by organizing into an order the names of the blocks in the datapath. In some examples, the datapath map can be a block diagram of the blocks on the datapath. The block diagram can be hierarchical (or blocks within blocks on the datapath). This approach allows for more efficient identification and resolution of problems within the datapath. Additionally, it facilitates a structured method for tracking and managing datapath components.

There are several languages and methods for defining a datapath. In non-limiting examples, XML code is provided to illustrate a method for describing the datapath. In non-limiting examples, a user at a device 16(1) can use human verbiage to describe the datapath to the LLM 30 as well. However, other types of languages known in the art or other future languages that have not been defined yet can also be used. In a non-limiting example, the LLM can use languages that are token efficient. In this XML example of steps 405 and 410 of FIG. 4, XML code is used to create and order a list of the blocks in the datapath:
<SystemArchitecture>
   <Module>
      <Name>Module 1</Name>
      <Description>Main module containing two submodules</Description>
      <Submodules>
         <Submodule>
            <Name>SubmoduleA</Name>
            <Description>Contains FIFO_Instance1</Description>
            <FIFOInstanceName>FIFO_Instance1</FIFOInstanceName>
            <NextSubmodule>SubmoduleB</NextSubmodule>
         </Submodule>
         <Submodule>
            <Name>SubmoduleB</Name>
            <Description>Contains FIFO_Instance2</Description>
            <FIFOInstanceName>FIFO_Instance2</FIFOInstanceName>
         </Submodule>
      </Submodules>
   </Module>
   <Module>
      <Name>Module2</Name>
      <Description>Secondary module containing two submodules</Description>
      <Submodules>
         <Submodule>
            <Name>SubmoduleA</Name>
            <Description>Contains FIFO_Instance3</Description>
            <FIFOInstanceName>FIFO_Instance3</FIFOInstanceName>
            <NextSubmodule>SubmoduleB</NextSubmodule>
         </Submodule>
         <Submodule>
            <Name>SubmoduleB</Name>
            <Description>Contains FIFO_Instance4</Description>
            <FIFOInstanceName>FIFO_Instance4</FIFOInstanceName>
         </Submodule>
      </Submodules>
   </Module>
</SystemArchitecture>

In step 415 of FIG. 4, the diagnostic computing system 12 can generate a second set of pragma definitions for purposes of interest, and in step 420, the diagnostic computing system 12 can assign the second set of pragma definitions of the purposes of interest to the locations of interest. In other words, the diagnostic computing system 12 can generate pragma definitions to define available types of functions of the blocks in the datapath and then assign a type of function to each of the blocks in the map generated in step 410 of FIG. 4. The purposes of interest can include diagnostic data which can include packet counters, error counters, and functional statuses. The purposes of interest can include drop counters that indicate when network traffic goes missing or how much network traffic passes through successfully, which is a type of diagnostic data. These drop counters can be implemented in either software or hardware systems. Additionally, a purpose of interest can include an attack counter that can be used to determine how many have been identified as good or attacked traffic. Furthermore, another purpose of interest can include flow control mechanisms, such as FIFO or queue-based performance types. This approach allows for the LLM 30 to identify functions of each of the blocks in the datapath. By putting the functions together with the mapping from step 410, the LLM 30 is also able to identify a block and know an order of the counters, functions, and classifications of an external system, such as the client devices 16(1)-16(n).

In a non-limiting example, in XML code, an interface type that represents a software API or hard register set that monitors a FIFO intended to carry network traffic is described. The interface can include status and counters. In this non-limiting example, an interface type abstraction reference that can be used is PacketFIFO:
<PacketFIFO>
   <Registers>
      <Register>
         <Name>StatusFlags</Name>
         <Address>0x00</Address>
         <Description>Status flags indicating overflow, underflow, full, and empty conditions</Description>
         <Type>Read Only</Type>
         <Fields>
            <Field>
               <Name>Overflow</Name>
               <BitPosition>0</BitPosition>
               <Description>Set when FIFO overflows</Description>
            </Field>
            <Field>
               <Name>Underflow</Name>
               <BitPosition>1</BitPosition>
               <Description>Set when FIFO underflows</Description>
            </Field>
            <Field>
               <Name>Full</Name>
               <BitPosition>2</BitPosition>
               <Description>Set when FIFO is full</Description>
            </Field>
            <Field>
               <Name>Empty</Name>
               <BitPosition>3</BitPosition>
               <Description>Set when FIFO is empty</Description>
            </Field>
         </Fields>
         <Value>0x0</Value>
      </Register>
      <Register>
         <Name>PacketsReceived</Name>
         <Address>0x0 1 </Address>
         <Description>Total number of packets received</Description>
         <Type>Read Only</Type>
         <Value>0</Value>
      </Register>
      <Register>
         <Name>PacketsSent</Name>
         <Address>0x02</Address>
         <Description>Total number of packets sent</Description>
         <Type>Read Only</Type>
         <Value>0</Value>
      </Register>
      <Register>
         <Name>PacketsDropped</Name>
         <Address>0x03</Address>
         <Description>Total number of packets dropped due to errors or overflow</Description>
         <Type>Read Only</Type>
         <Value>0</Value>
      </Register>
   </Registers>
</PacketFIFO>

In step 425 of FIG. 4, the diagnostic computing system 12 can generate a third set of pragma definitions of positive and negative behavior. These definitions encompass known error conditions and known good states, providing a comprehensive framework for evaluating the performance and reliability of the datapath. By defining positive behavior, the system can recognize and confirm when the datapath is functioning correctly. Conversely, by defining negative behavior, the system can promptly identify and diagnose error conditions, facilitating timely interventions and corrections. This dual approach ensures a robust mechanism for maintaining optimal datapath performance and swiftly addressing any anomalies.

In a non-limiting example, in XML code, the following represents an example of how behavioral conditions and certain states can be described:
<Behavioral>
   <Name>PacketFIFO_Behavior</Name>
   <ReferenceType>PacketFIFO</ReferenceType>
   <States>
      <State>
         <Name>GOOD</Name>
         <Description>FIFO is operating normally, with no overflow or underflow, and is neither full nor empty.</Description>
         <Conditions>
            <Condition>
               <RegisterName>StatusFlags</RegisterName>
               <Bit>Overflow</Bit>
               <ExpectedValue>0</ExpectedValue>
            </Condition>
            <Condition>
               <RegisterName>StatusFlags</RegisterName>
               <Bit>Underflow</Bit>
               <ExpectedValue>0</ExpectedValue>
            </Condition>
            <Condition>
               <RegisterName>StatusFlags</RegisterName>
               <Bit>Full</Bit>
               <ExpectedValue>0</ExpectedValue>
            </Condition>
            <Condition>
               <RegisterName>StatusFlags</RegisterName>
               <Bit>Empty</Bit>
               <ExpectedValue>0</ExpectedValue>
            </Condition>
         </Conditions>
      </State>
      <State>
         <Name>OK</Name>
         <Description>FIFO is either full or empty but is not experiencing overflow or underflow. </Description>
         <Conditions>
            <Condition>
               <RegisterName>StatusFlags</RegisterName>
               <Bit>Overflow</Bit>
               <ExpectedValue>0</ExpectedValue>
            </Condition>
            <Condition>
               <RegisterName>StatusFlags</RegisterName>
               <Bit>Underflow</Bit>
               <ExpectedValue>0</ExpectedValue>
            </Condition>
         </Conditions>
      </State>
      <State>
         <Name>ERROR</Name>
         <Description>FIFO has encountered overflow or underflow, which may compromise data integrity.</Description>
         <Conditions>
            <Condition>
               <RegisterName>StatusFlags</RegisterName>
               <Bit>Overflow</Bit>
               <ExpectedValue>1</ExpectedValue>
            </Condition>
            <Condition>
               <RegisterName>StatusFlags</RegisterName>
               <Bit>Underflow</Bit>
               <ExpectedValue>1</ExpectedValue>
            </Condition>
         </Conditions>
      </State>
   </States>
</Behavioral>

In step 445, the diagnostic computing system 12 can configure the LLM 30 to evaluate data to identify errors in the datapath by training the LLM 30 with an initial training data set. The initial training data set can include the first set of pragma definitions for the locations of interest, the datapath map of the locations of interest, the second set of pragma definitions for the purposes of interest and the third set of pragma definitions of positive and negative behavior. By leveraging this comprehensive training data set, the LLM 30 can effectively learn to identify and diagnose errors within the datapath, ensuring a high level of accuracy and reliability in its evaluations. This configuration enables the system to continuously monitor and improve the performance of the datapath, adapting to new conditions and error patterns as they arise.

The LLM 30 can use the information in the training set to identify the first problem that occurred in the system by analyzing the sequence of events and the corresponding pragma definitions. In non-limiting examples, the first problem can be an error or inciting behavior, a datapath problem such as congestion causing slowness, or other problems known in the art. By comparing the real-time data against the known good states and error conditions defined in the training set, the LLM 30 can pinpoint deviations from expected behavior. The hierarchical structure of the datapath map allows the LLM 30 to trace the flow of data through various blocks, identifying the exact location and nature of the first anomaly. The datapath is not limited to a single device and can traverse one or more devices 16(1)-16(n) (such as routers, switches, firewalls, etc. or any device in the path that processes network traffic through a network). This process involves cross-referencing the diagnostic data, such as packet counters and error counters, with the positive and negative behavior definitions to isolate the initial error. Consequently, the LLM 30 can provide a detailed report on the first problem, including its location, type, and potential impact on the overall system, thereby enabling prompt and effective troubleshooting.

In some examples, as illustrated in FIG. 4, in steps 430 through 445, the diagnostic computing system 12 can generate registers, generate a fourth set of pragma definitions of purposes of the registers, **insert the fourth set of pragma definitions into datapath locations source code,** and **generate a fifth set of pragma definitions of the datapath locations** for the LLM 30. The registers can serve as consistent and standardized storage locations for data as it moves through various stages of processing in the datapath. The registers can be generated as consistent registers to ensure uniformity across the system, addressing the problem of multiple developers creating different registers. This consistency simplifies the debugging process, as the LLM 30 can efficiently handle uniform register definitions.

Inserting pragma definitions of the purposes of the registers into the source code can offer several significant benefits. Firstly, it ensures that all developers adhere to a standardized approach, which minimizes discrepancies and inconsistencies in the system. This standardization is crucial for the LLM 30 to efficiently process and analyze the data, as it can rely on uniform definitions and structures. Secondly, pragma definitions provide clear and explicit documentation within the source code, making it easier for developers and the LLM 30 to understand the purpose and function of each register and datapath location. This clarity enhances the maintainability and scalability of the system. Thirdly, by embedding pragma definitions directly into the source code, the system can dynamically adapt to changes and updates, ensuring that the LLM 30 always has access to the most current and accurate information. This dynamic adaptability is essential for continuous monitoring and improvement of the datapath performance. Overall, the insertion of pragma definitions into the source code streamlines the debugging process, enhances system reliability, and facilitates effective data analysis by the LLM 30.

In a non-limiting example, in XML code, a plurality of interface instances can be created and have relative data path locations defined as illustrated below:
<PacketFIFOInstances>
   <PacketFIFO>
      <Name>FIFO_Instance1</Name>
      <DataPathLocation>Module1/SubmoduleA</DataPathLocation>
      <BaseAddress>0x 1 000</BaseAddress>
   </PacketFIFO>
   <PacketFIFO>
      <Name>FIFO_Instance2</Name>
      <DataPathLocation>Module1/SubmoduleB</DataPathLocation>
      <BaseAddress>0x2000</BaseAddress>
   </PacketFIFO>
   <PacketFIFO>
      <Name>FIFO_Instance3</Name>
      <DataPathLocation>Module2/SubmoduleA</DataPathLocation>
      <BaseAddress>0x3000</BaseAddress>
   </PacketFIFO>
   <PacketFIFO>
      <Name>FIFO_Instance4</Name>
      <DataPathLocation>Module2/SubmoduleB</DataPathLocation>
      <BaseAddress>0x4000</BaseAddress>
   </PacketFIFO>
</PacketFIFOInstances>

Turning to step 445, the initial training data set used to train the LLM 30 can further include the fourth set of pragma definitions of purposes of registers and the fifth set of pragma definitions of the datapath locations. By adding pragma definitions to define the purpose of a register or a plurality of registers, the system can abstract the interface type, making it easier for the LLM 30 to understand and manage the registers. Additionally, by defining the datapath location with pragma definitions, the LLM 30 can accurately identify and categorize each location, such as entry points and exit points, within the datapath. This comprehensive approach ensures that the LLM 30 has all the necessary information to perform precise and effective debugging and analysis.

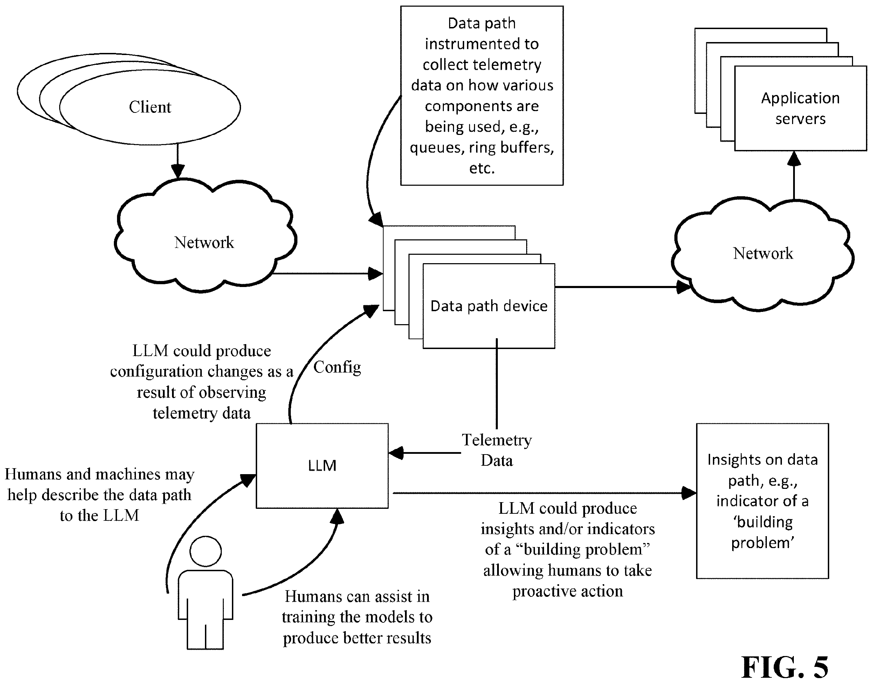

In some non-limiting examples, humans and machines can collaboratively help the LLM 30 produce better results. For example, a user at a client device 16(1)-16(n) can describe the datapath to the LLM 30 using the above method to produce the better results. By leveraging human expertise to create detailed and accurate pragma definitions, the diagnostic computing system 12 can ensure that the LLM 30 has a comprehensive understanding of the structure and functions of the datapath. Additionally, the user at the client device 16(1)-16(n) can provide the system 12 with example data of known problems. In a non-limiting example, the user can be an engineer who debugs problems in a datapath. Other than an engineer, the user can also be a network administrator, a system analyst, a cybersecurity specialist, or an IT support technician. Other professionals involved in monitoring, diagnosing, and resolving issues within network systems can also provide known problems to the system 12. Known problems can be packet loss, congestion, buffer overflow, underflow, latency issues, error counters, misrouting, security breaches, hardware failures, configuration errors, other known problems in the art, or combinations thereof. By providing example data of known problems to the LLM 30, the LLM 30 is able to be trained to recognize patterns, signals, and anomalies associated with these issues, thereby improving its diagnostic accuracy and efficiency. This collaborative approach allows for the integration of nuanced insights that might be difficult for the LLM 30 to infer independently. As shown in FIG. 5, this process can be a continuous loop, where the LLM 30's performance is constantly refined and improved over time. Feedback from real-world troubleshooting and system performance data can be used to update the pragma definitions and training data, enabling the LLM 30 to adapt to new challenges and improve improve diagnostic accuracy. This iterative cycle of human-machine collaboration ensures that the LLM 30 remains a robust and reliable tool for maintaining optimal datapath performance.

### Output from the LLM

Turning back to step 315 of FIG. 3 (and also displayed in FIG. 4, at step 455), the diagnostic computing system 12 can receive location data from the LLM 30 (the LLM 30 trained using the method described using FIG. 4 above) in response to the request sent to the LLM 30 from step 310. The location data can pinpoint the exact block or stage in the datapath where an problem first detected (e.g., a first problem), which can allow for targeted diagnosing. Using the location data, in some examples, human investigation can determine the root cause of the system problem. This precise identification enables developers and system administrators to focus their efforts on the specific area of the system that is malfunctioning, thereby reducing the time and resources spent on troubleshooting. By knowing the exact location of the first problem, the team can quickly isolate the problem, understand its context within the overall system, and implement corrective measures more efficiently.

Any information gathered from troubleshooting the system problem can be feed back to the third set of pragma definitions of positive and negative behavior. In step 320, the diagnostic computing system 12 can generate language data for a first problem that was identified based on the location data (i.e., the location of the first problem), the information gathered from troubleshooting the system problems, and the third set of pragma definitions of positive and negative behavior. In step 325, the diagnostic computing system 12 can continuously feed the language data to the LLM 30 in a loop. This feedback loop allows the system to continuously refine and update its understanding of known error conditions and known good states. By incorporating real-world troubleshooting data, the LLM 30 can enhance its predictive accuracy and diagnostic capabilities. Additionally, this iterative process helps in building a more robust and resilient system, as the LLM 30 becomes better equipped to identify and address emerging problems. Over time, this continuous improvement cycle ensures that the system remains adaptive and responsive to new challenges, ultimately leading to more reliable and efficient network operations. In step 330, the process terminates.

As displayed in FIG. 5, in step 315 of FIG. 3, the diagnostic computing system 12 can also receive configuration recommendations and an assessment from the LLM 30 (the LLM 30 trained using the method described using FIG. 4 above) in response to the request sent to the LLM 30 from step 310. Configuration recommendations can include suggestions for optimizing the datapath, such as adjusting buffer sizes or reconfiguring flow control mechanisms. The LLM 30 might also recommend updating firmware or software components to enhance compatibility and performance. Additionally, it can suggest implementing redundancy measures or load balancing techniques to ensure that the datapath can handle varying levels of traffic without degradation in performance. Receiving these configuration recommendations can significantly reduce the likelihood of future system failures by proactively addressing potential bottlenecks and inefficiencies. Moreover, it enables organizations to maintain optimal system performance and reliability, ultimately leading to improved user satisfaction and reduced operational costs.

Additionally, the diagnostic computing system 12 can also receive the assessment from the LLM 30. The assessment can provide a deeper understanding of the system's performance, highlighting patterns or anomalies that may not be immediately apparent. This data is created by the LLM 30 through its analysis of the structured training data, real-time telemetry data, and historical device diagnostic data dump. Data in the assessment can include trend analysis of packet loss over time, identification of recurring error patterns, and correlations between different types of system events. By continuously learning from new data and feedback, the LLM 30 can refine its models and improve its diagnostic accuracy over time. This live feedback loop ensures that the system remains adaptive and responsive to emerging problems, providing proactive insights and recommendations to maintain optimal performance. Furthermore, the assessment can serve as an early indicator of problems building within the system, allowing for proactive action before these problems escalate into significant failures. By catching potential problems ahead of time, organizations can implement timely interventions, thereby minimizing downtime and maintaining seamless operations.

Having thus described the basic concept of the invention, it will be rather apparent to those skilled in the art that the foregoing detailed disclosure is intended to be presented by way of example only and is not limiting. Various alterations, improvements, and modifications will occur and are intended to those skilled in the art, though not expressly stated herein. These alterations, improvements, and modifications are intended to be suggested hereby, and are within the spirit and scope of the invention. Additionally, the recited order of processing elements or sequences, or the use of numbers, letters, or other designations, therefore, is not intended to limit the claimed processes to any order except as may be specified in the claims. Accordingly, the invention is limited only by the following claims and equivalents thereto.

## Claims

1. A method for diagnosing datapaths, implemented by a network traffic management system comprising one or more network traffic apparatuses, client devices, or server devices, comprising:
generating a prompt comprising at least one of device diagnostic data dump or a live stream of telemetry data associated with datapath devices;
providing, to a large language model, the prompt, wherein the large language model is configured to evaluate at least one of the device diagnostic data dump or the live stream of telemetry data to identify a first problem in a datapath; and
receiving, from the large language model, at least one of a configuration recommendation or location data of at least (i) one identified problem based on the device diagnostic data dump or the live stream of the telemetry data, or (ii) at least one identified potential problem based on the telemetry data.

2. The method as set forth in claim 1, wherein the large language model is trained by:
generating a first set of pragma definitions for locations of interest in the datapath by assigning names to blocks in the datapath;
generating a datapath map of the locations of interest by organizing the assigned block names into an order;
generating a second set of pragma definitions for purposes of interest, wherein the purposes of interest comprise diagnostic data;
assigning the second set of pragma definitions of the purposes of interest to the locations of interest;
generating a third set of pragma definitions of known positive and negative behavior; and
configuring the large language model to identify the at least one identified problem or the at least one identified potential problem in the datapath by training the large language model with an initial training data set, wherein the initial training data set comprises the first set of pragma definitions for the locations of interest, the datapath map of the locations of interest, the second set of pragma definitions for the purposes of interest and the third set of pragma definitions of positive and negative behavior.

3. The method as set forth in claim 2, wherein the large language model is trained using supervised learning techniques by:
receiving, from a user, example data of known problems;
inserting a fourth set of pragma definitions of purposes of registers into datapath locations in a source code; and
generating a fifth set of pragma definitions of the datapath locations,
wherein the initial training data set used to train the large language model further comprises at least one of the example data, the fourth set of pragma definitions of purposes of registers, or the fifth set of pragma definitions of the datapath locations;
or wherein the large language model is further configured to generate an assessment or the configuration recommendation, and wherein the assessment is associated with the device diagnostic data dump or the live stream of the telemetry data.

4. The method as set forth in claim 2, further comprising:
generating histogram buckets to organize network traffic passing through the datapath based on predefined criteria;
assigning the network traffic matching at least a portion of the predefined criteria to a corresponding histogram bucket;
analyzing histogram buckets for a distribution and frequency of the network traffic;
determining whether any histogram bucket reaches a predefined threshold; and
in response to determining a histogram bucket reaches the predefined threshold, transmitting an alarm to a client device and providing, to the large language model, at least one of current device diagnostic data dump, current telemetry data, or the determined bucket; and
receiving, from the large language model, additional location data of another error in the datapath related to the determined bucket.

5. A non-transitory computer readable medium having stored thereon instructions for diagnosing a datapath comprising executable code which when executed by one or more processors, causes the processors to:
generate a prompt comprising at least one of device diagnostic data dump or a live stream of telemetry data associated with the datapath;
provide, to a large language model, the prompt, wherein the large language model is configured to evaluate at least one of the device diagnostic data dump or the live stream of the telemetry data to identify a first problem in a datapath; and
receive, from the large language model, at least one of a configuration recommendation or location data of at least (i) one identified problem based on the device diagnostic data dump or the live stream of the telemetry data, or (ii) at least one identified potential problem based on the telemetry data.

6. The medium as set forth in claim 5, wherein the large language model is trained by:
generating a first set of pragma definitions for locations of interest in the datapath by assigning names to blocks in the datapath;
generating a datapath map of the locations of interest by organizing the assigned block names into an order;
generating a second set of pragma definitions for purposes of interest, wherein the purposes of interest comprise diagnostic data;
assigning the second set of pragma definitions of the purposes of interest to the locations of interest;
generating a third set of pragma definitions of known positive and negative behavior; and
configuring the large language model to identify the at least one identified problem or the at least one identified potential problem in the datapath by training the large language model with an initial training data set, wherein the initial training data set comprises the first set of pragma definitions for the locations of interest, the datapath map of the locations of interest, the second set of pragma definitions for the purposes of interest and the third set of pragma definitions of positive and negative behavior.

7. The medium as set forth in claim 6, wherein the large language model is trained using supervised learning techniques by:
receiving, from a user, example data of known problems;
inserting a fourth set of pragma definitions of purposes of registers into datapath locations in a source code; and
generating a fifth set of pragma definitions of the datapath locations,
wherein the initial training data set used to train the large language model further comprises at least one of the example data, the fourth set of pragma definitions of purposes of registers, or the fifth set of pragma definitions of the datapath locations;
or wherein the large language model is further configured to generate an assessment or the configuration recommendation, and wherein the assessment is associated with the device diagnostic data dump or the live stream of the telemetry data.

8. The medium as set forth in claim 6, wherein the executable code which when executed by the one or more processors, further causes the processors to:
generate histogram buckets to organize network traffic passing through the datapath based on predefined criteria;
assign network traffic matching at least a portion of the predefined criteria to a corresponding histogram bucket;
analyze histogram buckets for a distribution and frequency of the network traffic;
determine whether any histogram buckets reaches a predefined threshold; and
in response to determining a histogram bucket reaches the predefined threshold, transmit an alarm to a client device and provide, to the large language model, at least one of current device diagnostic data dump, current telemetry data, or the determined bucket; and
receive, from the large language model, additional location data of another error in the datapath related to the determined bucket.

9. A network traffic manager apparatus, comprising memory comprising programmed instructions stored in the memory and one or more processors configured to be capable of executing the programmed instructions stored in the memory to:
generate a prompt comprising at least one of device diagnostic data dump or a live stream of telemetry data associated with datapath devices;
provide, to a large language model, the prompt, wherein the large language model is configured to evaluate at least one of the device diagnostic data dump or the live stream of the telemetry data to identify a first problem in a datapath; and
receive, from the large language model, at least one of a configuration recommendation or location data of at least (i) one identified problem based on the device diagnostic data dump or the live stream of the telemetry data, or (ii) at least one identified potential problem based on the telemetry data.

10. The device as set forth in claim 9, wherein the large language model is trained by:
generating a first set of pragma definitions for locations of interest in the datapath by assigning names to blocks in the datapath;
generating a datapath map of the locations of interest by organizing the assigned block names into an order;
generating a second set of pragma definitions for purposes of interest, wherein the purposes of interest comprise diagnostic data;
assigning the second set of pragma definitions of the purposes of interest to the locations of interest;
generating a third set of pragma definitions of known positive and negative behavior; and
configuring the large language model to identify the at least one identified problem or the at least one identified potential problem in the datapath by training the large language model with an initial training data set, wherein the initial training data set comprises the first set of pragma definitions for the locations of interest, the datapath map of the locations of interest, the second set of pragma definitions for the purposes of interest and the third set of pragma definitions of positive and negative behavior.

11. The device as set forth in claim 10, wherein the large language model is trained using supervised learning techniques by:
receiving, from a user, example data of known problems;
inserting a fourth set of pragma definitions of purposes of registers into datapath locations in a source code; and
generating a fifth set of pragma definitions of the datapath locations,
wherein the initial training data set used to train the large language model further comprises at least one of the example data, the fourth set of pragma definitions of purposes of registers, or the fifth set of pragma definitions of the datapath locations;
or wherein the large language model is further configured to generate an assessment or the configuration recommendation, and wherein the assessment is associated with the device diagnostic data dump or the live stream of the telemetry data.

12. The device as set forth in claim 10, wherein the one or more processors are further configured to execute the programmed instructions stored in the memory to:
generate histogram buckets to organize network traffic passing through the datapath based on predefined criteria;
assign network traffic matching at least a portion of the predefined criteria to a corresponding histogram bucket;
analyze histogram buckets for a distribution and frequency of the network traffic;
determine whether any histogram buckets reaches a predefined threshold; and
in response to determining a histogram bucket reaches the predefined threshold, transmit an alarm to a client device and provide, to the large language model, at least one of current device diagnostic data dump, current telemetry data, or the determined bucket; and
receive, from the large language model, additional location data of another error in the datapath related to the determined bucket.

13. A network traffic management system, comprising one or more traffic management apparatuses, client devices, or server devices, the network traffic management system comprising memory comprising programmed instructions stored thereon and one or more processors configured to be capable of executing the programmed instructions to:
generate a prompt comprising at least one of device diagnostic data dump or a live stream of telemetry data associated with datapath devices;
provide, to a large language model, the prompt, wherein the large language model is configured to evaluate at least one of the device diagnostic data dump or the live stream of telemetry data to identify a first problem in a datapath; and
receive, from the large language model, at least one of a configuration recommendation or location data of at least (i) one identified problem based on the device diagnostic data dump or the live stream of telemetry data, or (ii) at least one identified potential problem based on the telemetry data.

14. The network traffic management system of claim 13, wherein the large language model is trained by:
generating a first set of pragma definitions for locations of interest in the datapath by assigning names to blocks in the datapath;
generating a datapath map of the locations of interest by organizing the assigned block names into an order;
generating a second set of pragma definitions for purposes of interest, wherein the purposes of interest comprise diagnostic data;
assigning the second set of pragma definitions of the purposes of interest to the locations of interest;
generating a third set of pragma definitions of known positive and negative behavior; and
configuring the large language model to identify the at least one identified problem or the at least one identified potential problem in the datapath by training the large language model with an initial training data set, wherein the initial training data set comprises the first set of pragma definitions for the locations of interest, the datapath map of the locations of interest, the second set of pragma definitions for the purposes of interest and the third set of pragma definitions of positive and negative behavior.

15. The network traffic management system of claim 14, wherein the large language model is trained using supervised learning techniques by:
receiving, from a user, example data of known problems;
inserting a fourth set of pragma definitions of purposes of registers into datapath locations in a source code; and
generating a fifth set of pragma definitions of the datapath locations,
wherein the initial training data set used to train the large language model further comprises at least one of the example data, the fourth set of pragma definitions of purposes of registers, or the fifth set of pragma definitions of the datapath locations;
or wherein the large language model is further configured to generate an assessment or the configuration recommendation, and wherein the assessment is associated with the device diagnostic data dump or the live stream of the telemetry data.

16. The network traffic management system of claim 14, wherein the one or more processors are further configured to execute the programmed instructions stored in the memory to:
generate histogram buckets to organize network traffic passing through the datapath based on predefined criteria;
assign network traffic matching at least a portion of the predefined criteria to a corresponding histogram bucket;
analyze histogram buckets for a distribution and frequency of the network traffic;
determine whether any histogram buckets reaches a predefined threshold; and
in response to determining a histogram bucket reaches the predefined threshold, transmit an alarm to a client device and provide, to the large language model, at least one of current device diagnostic data dump, current telemetry data, or the determined bucket; and
receive, from the large language model, additional location data of another error in the datapath related to the determined bucket.
